# EUROPEAN PATENT APPLICATION

(11) **EP 4 439 764 A1**
(43) Date of publication of application: **02.10.2024**
(21) Application number: 24164280.0
(22) Date of filing: 18.03.2024
(51) Int. Cl.: H01M 10/0525, H01M 10/0567

(54) **ELECTROLYTE FOR LITHIUM SECONDARY BATTERY AND LITHIUM SECONDARY BATTERY COMPRISING THE SAME**

(30) Priority: 26.03.2023 KR 20230039339
(71) Applicant: Samsung SDI Co., Ltd., Yongin-si, Gyeonggi-do 17084 (KR)
(72) Inventor: Kim, Sundae, 17084 Yongin-si (KR); Yang, Yeji, 17084 Yongin-si (KR); Park, Sangwoo, 17084 Yongin-si (KR); Kim, Sanghoon, 17084 Yongin-si (KR); Choi, Hyunbong, 17084 Yongin-si (KR); Park, Hongryeol, 17084 Yongin-si (KR); Kim, Dahyun, 17084 Yongin-si (KR)
(74) Representative: Crow, Martin

(57) **Abstract**

An electrolyte for a lithium secondary battery and a lithium secondary battery comprising the same are described herein. The electrolyte for a lithium secondary battery may comprise a lithium salt, an organic solvent, and an additive represented by Formula 1 below. 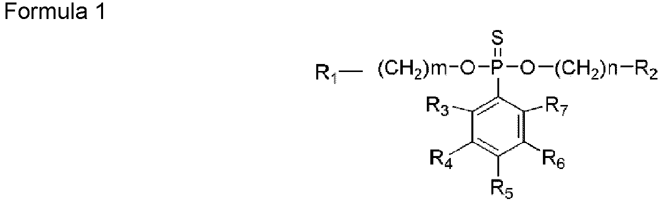 In Formula 1, m, n, and R₁ to R₇ are as defined in the detailed description.

## Description

### BACKGROUND

### 1. Field

Embodiments of the present disclosure described herein are related to an electrolyte for a lithium secondary battery and a lithium secondary battery comprising the same.

### 2. Description of Related Art

Lithium secondary batteries have three or more times higher energy density per unit weight than existing lead-acid batteries, nickel-cadmium batteries, nickel-metal hydride batteries, and nickel-zinc batteries and are capable of being charged at a relatively high speed.

Lithium secondary batteries should be stable within an operating voltage range of a battery and should maintain stability (or safety) even beyond the operating voltage range. However, in some lithium secondary batteries, lithium excessively flows out of a positive electrode and excessively flows into a negative electrode under an overcharge and overvoltage environment. Thus, both (e.g., simultaneously) the positive and negative electrodes are in an unstable state.

In order to solve a problem due to such an overcharge and overvoltage environment, one or more suitable additives are added to an electrolyte, resulting in some deterioration in performance of a lithium secondary battery.

Therefore, there is a need or desire to improve safety by improving overcharge characteristics of lithium secondary batteries (with suitable performance).

### SUMMARY

An aspect according to one or more embodiments is directed toward an electrolyte for a lithium secondary battery comprising a novel electrolyte additive.

An aspect according to one or more embodiments is directed toward a lithium secondary battery comprising the electrolyte.

Additional aspects will be set forth in part in the description which follows and, in part, will be apparent from the description, or may be learned by practice of the presented embodiments of the disclosure.

According to one embodiment, an electrolyte for a lithium secondary battery may comprise a lithium salt, an organic solvent, and an additive represented by Formula 1: 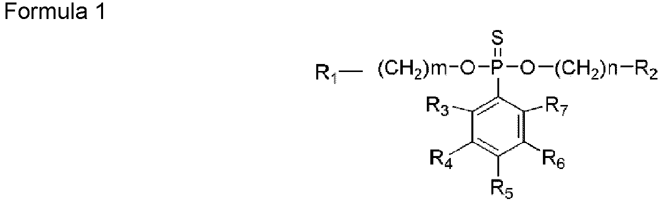 wherein, in Formula 1, m and n may each independently be an integer of 1 to 4, R₁ and R₂ may each independently be a substituted or unsubstituted C1-C20 alkyl group, a fluorinated C1-C20 alkyl group, a substituted or unsubstituted C2-C20 alkenyl group, a substituted or unsubstituted C3-C20 alkynyl group, a substituted or unsubstituted C6-C50 aryl group, or a substituted or unsubstituted C6-C50 heteroaryl group, and R₃ to R₇ may each independently be hydrogen, a C1-C5 alkyl group, a C2-C10 alkenyl group, a C3-C10 alkynyl group, a C3-C20 cycloalkyl group, a C6-C50 aryl group, a C7-C50 alkylaryl group, or a C6-C50 heteroaryl group.

According to one embodiment, a lithium secondary battery may comprise a positive electrode which comprises a positive electrode active material, a negative electrode which comprises a negative electrode active material, and the above-described electrolyte disposed between the positive electrode and the negative electrode.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a schematic view of a lithium secondary battery according to one embodiment;
FIG. 2 shows results of a linear sweep voltammetry test of coin-type or kind half secondary cell (CHC) utilizing each of electrolytes of Example 3, Example 8, and Comparative Example 1; and
FIG. 3 shows results of a linear sweep voltammetry test of three-electrode beaker cells utilizing the electrolytes according to Example 3, Example 8, and Comparative Example 1.

### DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described, by referring to the drawings, to explain aspects of the present description. As utilized herein, the term "and/or" includes any and all combinations of one or more of the associated listed items. Expressions such as "at least one of," when preceding a list of elements, modify the entire list of elements and do not modify the individual elements of the list.

Hereinafter, an electrolyte for a lithium secondary battery and a lithium secondary battery comprising the same will be described in more detail with reference to embodiments and drawings of the disclosure. It should be understood by one of ordinary skill in the art that these embodiments provided only for more specific illustration of the disclosure and are not to be construed as limiting the scope of the disclosure.

Unless otherwise defined, all technical and scientific terms utilized herein have the same meanings as commonly understood by one of ordinary skill in the art to which the disclosure. In case of conflict, the present specification, including definitions, will control.

Although any methods and materials similar or equivalent to those described herein can be utilized in the practice or testing of embodiments of the disclosure, suitable methods and materials are described herein. A singular form may comprise a plural form if (e.g., when) there is no clearly opposite meaning in the context.

As utilized herein, it is to be understood that the terms such as "including," "having," and "comprising" are intended to indicate the existence of the features, numbers, steps, actions, components, parts, ingredients, materials, or combinations thereof disclosed in the specification, and are not intended to preclude the possibility that one or more other features, numbers, steps, actions, components, parts, ingredients, materials, or combinations thereof may exist or may be added.

It will be understood that the term "a combination thereof' as utilized herein refers to a mixture or combination inclusive of two or more components.

As utilized herein, the term "and/or" comprises any and all combinations of one or more of the associated listed items. As utilized herein, the term "or" refers to the term "and/or." As utilized herein, the expression "at least one species," "at least one," or "one or more" in front of elements refers to that the expression may complement the entire list of elements and does not refer to that the expression may complement individual elements described above.

In the drawings, the thickness of layers, films, panels, regions, and/or the like are exaggerated for clarity. Like reference numerals designate like elements throughout, and duplicative descriptions thereof may not be provided the specification. Throughout the specification, it will be understood that if (e.g., when) a component, such as a layer, a film, a region, or a plate, is referred to as being "on" another component, the component may be directly on the other component or intervening components may be present thereon. Throughout the specification, while such terms as "first," "second," and/or the like may be utilized to describe one or more suitable components, such components should not be limited to the above terms. The above terms are utilized only to distinguish one component from another.

In general, an overcharge property-improving additive may have a structure comprising a biphenyl group. If (e.g., when) the overcharge property-improving additive is included in an electrolyte, in a lithium secondary battery comprising the electrolyte, the electrolyte may start to be decomposed even within a normal operating voltage range, which may increase cell internal resistance and deteriorate performance such as lifespan characteristics.

An electrolyte for a lithium secondary battery according to one embodiment may comprise a lithium salt, an organic solvent, and an additive represented by Formula 1.

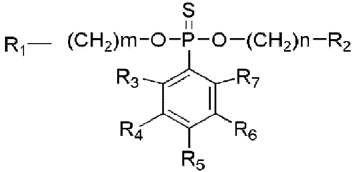

In Formula 1, m and n may each be independently an integer of 1 to 4, R₁ and R₂ may each independently be a substituted or unsubstituted C1-C20 alkyl group, a fluorinated C1-C20 alkyl group, a substituted or unsubstituted C2-C20 alkenyl group, a substituted or unsubstituted C3-C20 alkynyl group, a substituted or unsubstituted C6-C50 aryl group, or a substituted or unsubstituted C6-C50 heteroaryl group, and R₃ to R₇ may each independently be hydrogen, a C1-C5 alkyl group, a C2-C10 alkenyl group, a C3-C10 alkynyl group, a C3-C20 cycloalkyl group, a C6-C50 aryl group, a C7-C50 alkylaryl group, or a C6-C50 heteroaryl group.

According to one embodiment, one or both (e.g., simultaneously) of R₁ and R₂ in Formula 1 may each be a fluorinated C1-C20 alkyl group or a substituted or unsubstituted C3-C20 alkynyl group.

The fluorinated C1-C20 alkyl group may be, for example, a perfluorinated C1-C20 alkyl group.

In Formula 1, R₁ and R₂ may each independently be -CF₃, -CF₂CF₃, -CH=CH₂, or a propynyl group. R₃ to R₇ may all be hydrogen, and n and m may be identical to each other and may each be an integer of 1 to 4, an integer of 2 to 3, or 2.

The additive represented by Formula 1 may comprise a P=S group to protect a surface of a positive electrode, thereby contributing to structural stabilization of the positive electrode. Because the additive has a structure in which a phenyl group is bonded to phosphorus of a -OP(=S)0- moiety in Formula 1, the additive may be oxidized to protect the surface of the positive electrode.

According to one embodiment, because the additive represented by Formula 1 has a structure in which a phenyl group is substituted with a -OP(=S)0- moiety and a fluorinated alkyl group such as CF₃, the additive comprises a chemically stable halogen atom so that surface tension of an electrolyte may be lowered to increase interfacial wetting. If (e.g., when) such an electrolyte is utilized, a current density of a Li negative electrode may be lowered, thereby lowering the growth of Li-dendrites. In some embodiments, a fluorinated alkyl group such as CF₃ forms a solid electrolyte interface (SEI) film with high interfacial energy like LiF at a Li negative electrode and thus has an effect of suppressing the growth of Li-dendrites, has excellent or suitable flame retardancy, and is preferentially oxidized, thereby serving to suppress or reduce a voltage rise of a battery in a high voltage environment.

According to another embodiment, because the additive represented by Formula 1 has a structure in which a phenyl group is substituted with a -OP(=S)O- moiety and unsaturated groups such as an alkynyl group and an alkenyl group, the above-described unsaturated groups may decompose to protect a surface of a negative electrode.

According to still another embodiment, because the additive represented by Formula 1 has a structure in which a phenyl group is substituted with a -OP(=S)O- moiety and an aryl group, an oxidation level of a battery may be increased so that the additive may be widely utilized for preventing or reducing overcharging. In some embodiments, if (e.g., when) the additive of Formula 1 has a structure in which a phenyl group is substituted with a - OP(=S)O- moiety and a heteroaryl group, an unshared electron pair of a heteroelement is bonded to a transition metal in a positive electrode has (or to have) an effect of stabilizing the positive electrode.

As described above, the electrolyte for a lithium secondary battery according to one embodiment may comprise the additive represented by Formula 1 to form a film on a positive electrode to protect the positive electrode in an overcharge and overvoltage environment. The additive may start to be decomposed at 4.5 V or more to suppress or reduce a voltage rise of a battery in an overcharge environment and block or reduce the decomposition of an electrolyte. Accordingly, in a lithium secondary battery comprising such an electrolyte, overcharge characteristics may be improved, thereby improving safety and improving high-temperature lifespan characteristics.

The additive represented by Formula 1 may be, for example, an additive represented by Formula 1-1.

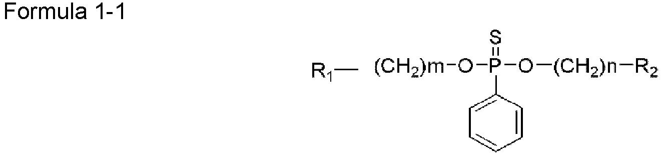

In Formula 1-1, m and n may each independently be an integer of 1 to 4, and R₁ and R₂ may each independently be a substituted or unsubstituted C1-C20 alkyl group, a fluorinated C1-C20 alkyl group, a substituted or unsubstituted C2-C20 alkenyl group, a substituted or unsubstituted C3-C20 alkynyl group, a substituted or unsubstituted C6-C50 aryl group, or a substituted or unsubstituted C6-C50 heteroaryl group.

The fluorinated C1-C20 alkyl group may comprise, for example, a perfluorinated C1-C20 alkyl group. n and m may be identical to each other and may each be an integer of 1 to 4, an integer of 2 to 3, or 2.

The additive represented by Formula 1 may comprise an additive represented by Formulas 2 or Formula 3.

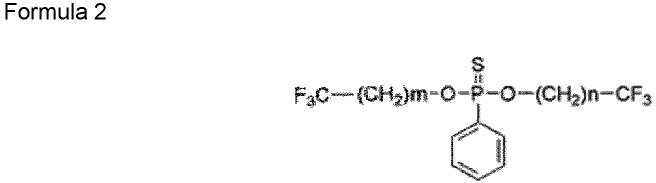

In Formula 2, m and n may be identical to each other and may each be an integer of 1 to 4.

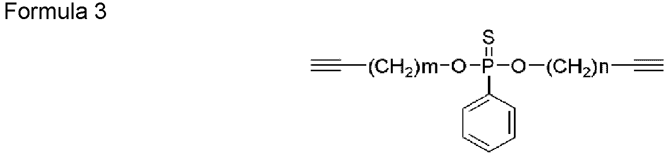

In Formula 3, m and n may be identical to each other and may each be an integer of 1 to 4.

In Formulas 2 and 3, n and m may be identical to each other and may each be an integer of 1 to 4, an integer of 2 to 3, or 2.

For example, the additive represented by Formula 1 may be selected from additives represented by Formulas 4 to 7.

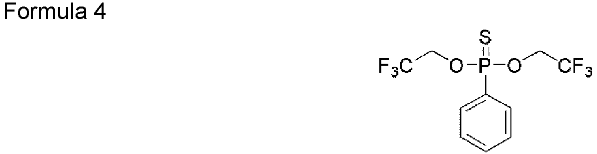

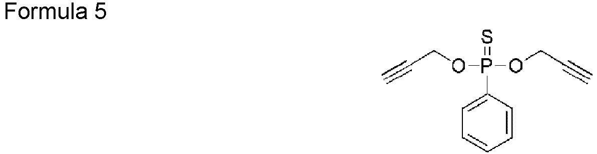

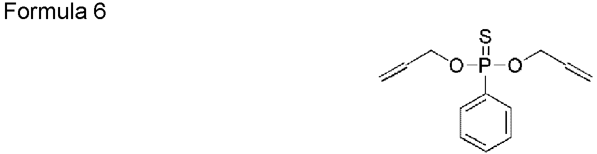

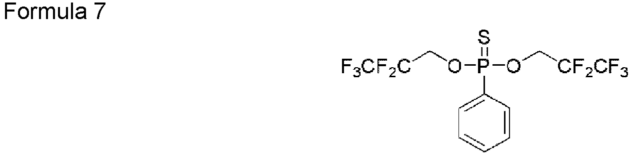

A content (e.g., amount) of the additive represented by Formula 1 may be in a range of about 0.1 wt% to about 10 wt%, about 0.1 wt% to about 5 wt%, or about 0.1 wt% to about 2 wt% with respect to the total weight of about 100 wt% of the electrolyte. If (e.g., when) the content (e.g., amount) of the additive is within the above range, a positive electrode may be protected in a high temperature environment to improve a lifespan and improve overcharge characteristics.

According to one embodiment, the lithium salt may comprise at least one selected from LiPF₆, LiBF₄, LiSbF₆, LiAsF₆, LiClO₄, LiCF₃SO₃, Li(CF₃SO₂)₂N, Li(FSO₂)₂N, LiC₄F₉SO₃, LiAlO₂, LiAlCl₄, LiN(CₓF₂ₓ₊₁SO₂)(C_{y}F_{2y+1}SO₂) (wherein 2≤x≤20 and 2≤y≤20), LiCl, Lil, lithium bis(oxalato)borate (LiBOB), LiPO₂F₂, and compounds represented by Formulas 8 to 11, but one or more embodiments are not limited thereto. Any material usable as a lithium salt in the art may be utilized.

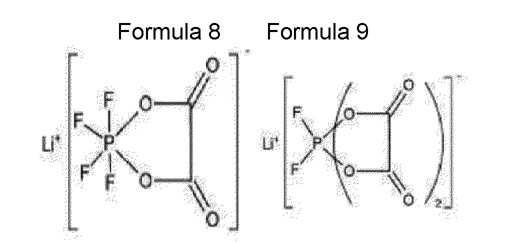

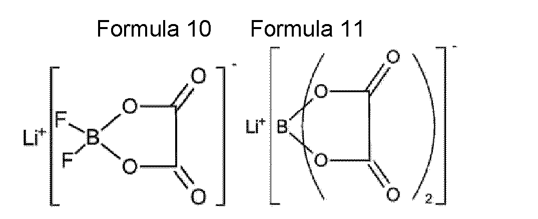

A concentration of the lithium salt in the electrolyte may be in a range of about 0.01 M to about 5.0 M, for example, in a range of about 0.05 M to about 5.0 M, for example, in a range of about 0.1 M to about 5.0 M, or for example, in a range of about 0.1 M to about 2.0 M. If (e.g., when) the concentration of the lithium salt is within the above range, it is possible to obtain further improved characteristics of a lithium secondary battery.

The organic solvent may be at least one selected from a carbonate-based solvent, an ester-based solvent, an ether-based solvent, and a ketone-based solvent.

The carbonate-based solvent may comprise ethyl methyl carbonate (EMC), methyl propyl carbonate (MPC), ethyl propyl carbonate (EPC), dimethyl carbonate (DMC), diethyl carbonate (DEC), dipropyl carbonate (DPC), propylene carbonate (PC), ethylene carbonate (EC), butylene carbonate (BC), and/or the like.

The ester-based solvent may comprise methyl propionate, ethyl propionate, ethyl butyrate, methyl acetate, ethyl acetate, n-propyl acetate, dimethyl acetate, gamma butyrolactone, decanolide, gamma valerolactone, mevalonolactone, caprolactone, and/or the like. The ether-based solvent may comprise dibutyl ether, tetraglyme, diglyme, dimethoxyethane, 2-methyltetrahydrofuran, tetrahydrofuran and/or the like. The ketone-based solvent may comprise cyclohexanone and/or the like. The nitrile-based solvent may comprise acetonitrile (AN), succinonitrile (SN), adiponitrile, and/or the like.

Other solvents included in the electrolyte may comprise dimethylsulfoxide, dimethylformamide, dimethylacetamide, tetrahydrofuran, and/or the like, but one or more embodiments are not necessarily limited thereto. Any material usable as an organic solvent in the art may be utilized. For example, the organic solvent may comprise a mixed solvent of about 50 vol% to about 95 vol% of chain carbonate and about 5 vol% to about 50 vol% of cyclic carbonate, for example, a mixed solvent of about 70 vol% to about 95 vol% of chain carbonate and about 5 wt% to about 30 vol% of cyclic carbonate. For example, the organic solvent may be a mixed solvent of three or more organic solvents.

According to one embodiment, the organic solvent may comprise at least one selected from EMC, MPC, EPC, DMC, DEC, DPC, PC, EC, fluoroethylene carbonate (FEC), vinylene carbonate (VC), vinylethylene carbonate (VEC), butylene carbonate, ethyl propionate, ethyl butyrate, dimethyl sulfoxide, dimethylformamide, dimethylacetamide, gamma-valerolactone, gamma-butyrolactone, and tetrahydrofuran, but one or more embodiments are not limited thereto. Any material usable as an organic solvent in the art may be utilized.

The electrolyte according to one embodiment may be in a liquid or gel state. The electrolyte may be prepared by adding a lithium salt and the above-described additive to an organic solvent.

A lithium secondary battery according to another embodiment may comprise a positive electrode comprising a positive electrode active material, a negative electrode comprising a negative electrode active material, and the above-described electrolyte disposed between the positive electrode and the negative electrode.

In the lithium secondary battery, because the electrolyte comprising the above-described additive for an electrolyte is utilized, it is possible to suppress or reduce an increase in initial resistance of the lithium secondary battery, suppress or reduce gas generation due to a side reaction, and improve lifespan characteristics.

A type or kind of the positive electrode active material is not particularly limited, but if (e.g., when) the above-described additive for an electrolyte is utilized, an excellent or suitable positive electrode-type or kind film may be formed due to an influence of a P=S bond, which is more effective in the case of a Co-free positive electrode which is free of cobalt or comprises a small amount of cobalt. A content (e.g., amount) of cobalt may be, for example, 5 mol% or less, or for example, 2 mol% or less, or cobalt may not be comprised.

The positive electrode active material may comprise a layered lithium metal oxide comprising nickel and a metal other than nickel. In a layered lithium transition metal oxide comprising nickel and a metal other than nickel, a content (e.g., amount) of nickel may be 60 mol% or more, or for example, 70 mol% or more, with respect to the total number of moles of a transition metal. For example, the layered lithium metal oxide may be a compound represented by Formula 12.

Formula 12 LiₐNiₓM_{z}O_{2-b}A_{b}

In Formula 12, 0.9≤a≤1.2, 0≤b≤0.2, 0.6≤x<1, 0<z≤0.4, x+z=1, M may be at least one selected from manganese (Mn), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), cobalt (Co),and boron (B), and A may be F, S, Cl, Br, and/or a combination thereof.

In Formula 12, for example, 0.7≤x<1 and 0<z≤0.3, or 0.8≤x<1 and 0<z≤0.2.

For example, the layered lithium metal oxide may be at least one selected from compounds represented by Formula 13 and Formula 14 (e.g., the layered lithium metal oxide may be at least one compound represented by at least one of Formula 13 or Formula 14).

Formula 13 LiₐNiₓMn_{y}M_{z}O₂

In Formula 13, 0.9≤a≤1.2, 0.6≤x≤0.95, 0<y≤0.4, 0<z≤0.1, and x+y+z=1. For example, 0.7≤x≤0.95, 0<y≤0.3, 0<z≤0.05, and M may be at least one selected from manganese (Mn), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), cobalt (Co), and boron (B).

Formula 14 LiₐNiₓMn_{y}Al_{z}O₂

In Formula 14, 0.9≤a≤1.2, 0.6≤x≤0.95, 0<y≤0.4, 0<z≤0.1, and x+y+z=1. For example, 0.7≤x≤0.95, 0<y≤0.3, and 0<z≤0.05. For example, 0.8≤x≤0.95, 0<y≤0.3, and 0<z≤0.05.

According to another embodiment, the positive electrode active material may comprise at least one active material selected from Li-Ni-Mn (LNMO), Li-Ni-Mn-Al (NMA), Li-Ni-Co-Al (NCA), Li-Ni-Co-Mn (NCM), lithium cobalt oxide (LiCoO₂), lithium manganese oxide (LiMnO₂), lithium nickel oxide (LiNiO₂), and lithium iron phosphate (LiFePO₄).

The negative electrode active material may comprise at least one selected from a silicon-based compound, a carbon-based material, a composite of a silicon-based compound and a carbon-based compound, and silicon oxide (SiOₓ, wherein 0<x<2). The silicon-based compound may comprise (e.g., may be in the form of) silicon particles, silicon alloy particles, and/or the like.

The silicon-based compound may have a size of less than 200 nm or for example, a size of about 10 nm to about 150 nm. The term "size" may refer to an average particle diameter if (e.g., when) the silicon-based compound is spherical and may refer to an average long axis length if (e.g., when) the silicon-based compound is non-spherical. In the present specification, a size may be confirmed through scanning electron microscope analysis.

If (e.g., when) the size of the silicon-based compound is within the above range, lifespan characteristics may be excellent or suitable, and thus if (e.g., when) the electrolyte according to one embodiment is utilized, a life time (lifespan) of a lithium secondary battery may be further improved.

The carbon-based material may be crystalline carbon, amorphous carbon, or a mixture thereof. The crystalline carbon may be graphite, such as natural graphite or artificial graphite, having a non-shaped, plate-like, flake-like, spherical, or fibrous form. The amorphous carbon may be soft carbon (low-temperature fired carbon), hard carbon, mesophase pitch carbide, or fired coke.

The composite of the silicon-based compound and the carbon-based compound may be a composite having a structure in which silicon nanoparticles are arranged on a carbon-based compound, a composite having a structure in which silicon particles are comprised on a surface of a carbon-based compound and inside the carbon-based compound, or a composite in which silicon particles are coated with a carbon-based compound and comprised inside the carbon-based compound. In the composite of the silicon-based compound and the carbon-based compound, the carbon-based compound may be, for example, crystalline carbon. For example, the carbon-based compound may be graphite, graphene, graphene oxide, or a combination thereof.

The composite of the silicon-based compound and the carbon-based compound may be an active material obtained by dispersing silicon nanoparticles having an average particle diameter (or size) of about 200 nm or less on carbon compound particles and then coating the silicon nanoparticles with carbon or an active material in which silicon (Si) particles are present on graphite and inside graphite. The composite of the silicon-based compound and the carbon-based compound may have an average secondary particle diameter (or size) of about 5 µm to about 20 µm. An average particle diameter (or size) of the silicon nanoparticles may be 5 nm or more, for example, 10 nm or more, for example, 20 nm or more, for example, 50 nm or more, or for example, 70 nm or more. The average particle diameter (or size) of the silicon nanoparticles may be 200 nm or less, 150 nm or less, 100 nm or less, 50 nm or less, 20 nm or less, or 10 nm or less. For example, the average particle diameter (or size) of the silicon nanoparticles may be in a range of about 100 nm to about 150 nm.

The composite of the silicon-based compound and the carbon-based compound may have an average secondary particle diameter (or size) of about 5 µm to about 18 µm, for example, about 7 µm to about 15 µm, or for example, about 10 µm to about 13 µm.

A silicon-carbon-based compound composite according to one embodiment may be a porous silicon composite cluster which comprises a porous core comprising one or more porous silicon composite secondary particles and a shell comprising second graphene disposed on the core, wherein the porous silicon composite secondary particles comprise (e.g., each comprise) an aggregate of two or more silicon composite primary particles, and the silicon composite primary particle comprises silicon, silicon oxide (SiOₓ) (wherein 0<x<2) disposed on the silicon, and first graphene disposed on the silicon oxide.

A silicon-carbon-based compound composite according to another embodiment may be a porous silicon composite cluster structure which comprises a porous silicon composite cluster comprising a porous silicon composite secondary particle and a second carbon flake on at least one surface of the porous silicon composite secondary particle, and a carbon-based coating film comprising amorphous carbon disposed on the porous silicon composite cluster, wherein the porous silicon composite secondary particle comprises an aggregate of two or more silicon composite primary particles, the silicon composite primary particle comprises silicon, silicon oxide (SiOₓ) (wherein O<x<2) on at least one surface of the silicon, and a first carbon flake on at least one surface of the silicon oxide, and the silicon oxide is present in a state of a film, a matrix, or a combination thereof.

The first carbon flake and the second carbon flake may each be present in a state of a film, a particle, a matrix, or a combination thereof. The first carbon flake and the second carbon flake may each be graphene, graphite, a carbon fiber, graphene oxide, and/or the like.

The above-described composite of the silicon-based compound and the carbon-based compound may be a composite having a structure in which silicon nanoparticles are arranged on a carbon-based compound, a composite having a structure in which silicon particles are comprised on a surface of a carbon-based compound and inside the carbon-based compound, or a composite in which silicon particles are coated with a carbon-based compound and comprised inside the carbon-based compound. In the composite of the silicon-based compound and the carbon-based compound, the carbon-based compound may be graphite, graphene, graphene oxide, or a combination thereof.

A shape of the lithium secondary battery is not particularly limited, and the lithium secondary battery may comprise a lithium ion battery, a lithium ion polymer battery, a lithium sulfur battery, and/or the like.

A lithium secondary battery may be manufactured through the following method.

First, a positive electrode is prepared.

For example, a positive electrode active material composition in which a positive electrode active material, a conductive material, a binder, and a solvent are mixed is prepared. The positive electrode active material composition is applied directly on a metal current collector to prepare a positive electrode plate. In some embodiments, the positive electrode active material composition may be cast on a separate support, and then the film peeled off of the support may be laminated on a metal current collector to prepare the positive electrode plate. The positive electrode is not limited to the forms listed above and may have forms other than the above forms.

As the positive electrode active material, any material, which is commonly utilized as a lithium-containing metal oxide in the art, may be utilized without limitation. For example, at least one composite oxide of lithium and a metal selected from cobalt, manganese, nickel, and a combination thereof may be utilized. A specific example of the positive electrode active material may comprise a compound represented by any one selected from LiₐA_{1-b}B¹_{b}D¹₂ (wherein 0.90≤a≤1.8 and 0≤b≤0.5), LiₐE_{1-b}B¹_{b}O_{2-c}D¹_{c} (wherein 0.90≤a≤1.8, 0≤b≤0.5, and 0≤c≤0.05), LiE_{2-b}B¹_{b}O_{4-c}D¹_{c} (wherein 0≤b≤0.5 and 0≤c≤0.05), LiₐNi_{1-b-c}Co_{b}B¹_{c}D¹_{α} (wherein 0.90≤a≤1.8, 0≤b≤0.5, 0≤c≤0.05, and 0<α≤2), LiₐNi_{1-b-c}Co_{b}B¹_{c}O_{2-α}F¹_{α} (wherein 0.90≤a≤1.8, 0≤b≤0.5, 0≤c≤0.05, and 0<α<2), LiₐNi_{1-b-c}Co_{b}B¹_{c}O_{2-α}F¹₂ (wherein 0.90≤a≤1.8, 0≤b≤0.5, 0≤c≤0.05, and 0<α<2), LiₐNi_{1-b-c}Mn_{b}B¹_{c}D_{α} (wherein 0.90≤a≤1.8, 0≤b≤0.5, 0≤c≤0.05, and 0<α≤2), LiₐNi_{1-b-c}Mn_{b}B¹_{c}O_{2-α}F¹_{α} (wherein 0.90≤a≤1.8, 0≤b≤0.5, 0≤c≤0.05, and 0<α<2), LiₐNi_{1-b-c}Mn_{b}B¹_{c}O_{2-α}F¹₂ (wherein 0.90≤a≤1.8, 0≤b≤0.5, 0≤c≤0.05, and 0<α<2), LiₐNi_{b}E_{c}G_{d}O₂ (wherein 0.90≤a≤1.8, 0≤b≤0.9, 0≤c≤0.5, and 0.001≤d≤0.1), LiₐNi_{b}Co_{c}Mn_{d}GeO₂ (wherein 0.90≤a≤1.8, 0≤b≤0.9, 0≤c≤0.5, 0≤d≤0.5, and 0.001≤e≤0.1), LiₐNiG_{b}O₂ (wherein 0.90≤a≤1.8 and 0.001≤b≤0.1), LiₐCoG_{b}O₂ (wherein 0.90≤a≤1.8 and 0.001≤b≤0.1), LiₐMnG_{b}O₂ (wherein 0.90≤a≤1.8 and 0.001≤b≤0.1), LiₐMn₂G_{b}O₄ (wherein 0.90≤a≤1.8 and 0.001≤b≤0.1), QO₂, QS₂, LiQS₂, V₂O₅, LiV₂O₅, LiIO₂, LiNiVO₄, Li_{(3-f)}J₂(PO₄)₃ (wherein 0≤f≤2), Li_{(3-f)}Fe₂(PO₄)₃ (wherein 0≤f≤2), and LiFePO₄.

In the formulas above, A may be Ni, Co, Mn, or a combination thereof, B¹ may be Al, Ni, Co, Mn, Cr, Fe, Mg, Sr, V, a rare earth element, or a combination thereof, D¹ may be O, F, S, P, or a combination thereof, E may be Co, Mn, or a combination thereof, F¹ may be F, S, P, or a combination thereof, G may be Al, Cr, Mn, Fe, Mg, La, Ce, Sr, V, or a combination thereof, Q may be Ti, Mo, Mn, or a combination thereof, I may be Cr, V, Fe, Sc, Y, or a combination thereof, and J may be V, Cr, Mn, Co, Ni, Cu, or a combination thereof.

For example, LiCoO₂, LiMnₓO₂ₓ (wherein x=1 or 2), LiNi₁₋ₓMnₓO₂ₓ (wherein 0<x<1), LiNi_{1-x-y}CoₓMn_{y}O₂ (wherein 0≤x≤0.5 and 0≤y≤0.5), LiFePO₄, and/or the like may be utilized.

Of course, a compound having a coating layer on a surface of the compound may be utilized, or a mixture of the compound and a compound having a coating layer may be utilized. The coating layer may comprise a coating element compound of an oxide or hydroxide of a coating element, an oxyhydroxide of the coating element, an oxycarbonate of the coating element, or a hydroxycarbonate of the coating element. A compound constituting the coating layer may be amorphous or crystalline. The coating element comprised in the coating layer may comprise Mg, Al, Co, K, Na, Ca, Si, Ti, V, Sn, Ge, Ga, B, As, Zr, or a mixture thereof. In a process of forming the coating layer, any coating method may be utilized as long as the compound may be coated with such elements through a method (for example, a spray coating method or a dipping method) that does not adversely affect physical properties of the positive electrode active material. Because the coating method is suitable to those who work in the related field, a detailed description thereof will not be provided.

The conductive material may comprise carbon black, graphite fine particles, and/or the like, but one or more embodiments are not limited thereto. Any material usable as a conductive material in the art may be utilized.

The binder may comprise at least one selected from a vinylidene fluoride/hexafluoropropylene copolymer, polyvinylidene fluoride (PVDF), polyacrylonitrile, polymethyl methacrylate, polytetrafluoroethylene, a mixture thereof, or a styrene butadiene rubber-based polymer, but one or more embodiments are not limited thereto. Any material usable as a binder in the art may be utilized.

The solvent may comprise N-methylpyrrolidone, acetone, or water, but one or more embodiments are not limited thereto. Any solvent usable in the art may be utilized.

Contents of the positive electrode active material, the conductive material, the binder, and the solvent are at levels that are commonly utilized in a lithium battery. One or more of the conductive material, the binder, and the solvent may not be provided according to the use and configuration of a lithium battery.

Next, a negative electrode is prepared.

For example, a negative electrode active material composition is prepared by mixing a negative electrode active material, a binder, and a solvent. The negative electrode active material composition is applied directly on a metal current collector and dried to prepare a negative electrode plate. In some embodiments, the negative electrode active material composition may be cast on a separate support, and then a film peeled off of the support may be laminated on a metal current collector to prepare the negative electrode plate.

Any material suitable for a negative electrode active material of a lithium battery may be utilized as the negative electrode active material. For example, the negative electrode active material may comprise at least one selected from a lithium metal, a metal capable of forming an ally with lithium, a transition metal oxide, a non-transition metal oxide, and a carbon-based material.

For example, the metal capable of forming an ally with lithium may be Si, Sn, Al, Ge, Pb, Bi, Sb, a Si-Y alloy (wherein Y is an alkali metal, an alkaline earth metal, a Group 13 element, a Group 14 element, a transition metal, a rare earth element, or a combination thereof and is not Si), or a Sn-Y alloy (wherein Y is an alkali metal, an alkaline earth metal, a Group 13 element, a Group 14 element, a transition metal, a rare earth element, or a combination thereof and is not Sn). The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, or a combination thereof.

For example, the transition metal oxide may be lithium titanium oxide, vanadium oxide, lithium vanadium oxide, and/or the like.

For example, the non-transition metal oxide may be SnO₂, SiOₓ (wherein 0<x<2), and/or the like.

The carbon-based material may be crystalline carbon, amorphous carbon, or a mixture thereof. The crystalline carbon may be graphite such as non-shaped, plate-shaped, flake-shaped, spherical, or fibrous natural graphite or artificial graphite. The amorphous carbon may be soft carbon (low-temperature fired carbon) or hard carbon, mesophase pitch carbide, fired coke, and/or the like.

Non-limiting examples of a binder for a negative electrode may comprise one or more suitable types (kinds) of binder polymers such as a polyvinylidene fluoride-hexafluoropropylene (PVDF-co-HFP) copolymer, polyvinylidene fluoride, polyacrylonitrile, polymethyl methacrylate, polyvinyl alcohol, carboxylmethylcellulose (CMC), starch, hydroxypropylcellulose, regenerated cellulose, polyvinyl pyrrolidone, tetrafluoroethylene, polyethylene, polypropylene, a polyacrylic acid, an ethylene-propylene-diene monomer (EPDM), a sulfonated EPDM, styrene-butadiene rubber (SBR), fluoro rubber, a poly acrylic acid, a polymer in which hydrogen thereof is substituted with Li, Na or Ca, and one or more suitable copolymers.

The negative electrode active material layer may further comprise a thickener.

The thickener may comprise at least one selected from CMC, carboxyethyl cellulose, starch, regenerated cellulose, ethyl cellulose, hydroxymethyl cellulose, hydroxyethyl cellulose, hydroxypropyl cellulose, and polyvinyl alcohol may be utilized, and for example, CMC may be utilized.

A content (e.g., amount) of the solvent may be in a range of about 100 parts by weight to about 300 parts by weight with respect to the total weight of about 100 parts by weight of the negative electrode active material. If (e.g., when) the content (e.g., amount) of the solvent is within the above range, an operation of forming the negative electrode active material layer may be easy.

If (e.g., when) conductivity is secured, the negative electrode active material layer does not require a conductive material. The negative electrode active material layer may further comprise a conductive material as needed. The conductive material is not particularly limited as long as the material has conductivity (e.g., is a conductor) without causing a chemical change in a corresponding battery. For example, the conductive material may comprise graphite such as natural graphite or artificial graphite, a carbon-based material such as carbon black, acetylene black, Ketjen black, channel black, furnace black, lamp black, or summer black, a conductive fiber such as a carbon fiber or a metal fiber, conductive tubes such as carbon nanotubes, fluorinated carbon, a metal powder such as an aluminum or nickel powder, conductive whiskey such as zinc oxide or potassium titanate, a conductive metal oxide such as titanium oxide, a conductive material such as a polyphenylene derivative, and/or the like. The conductive material may be carbon black or may be carbon black having an average particle diameter of several tens of nanometers.

If (e.g., when) the negative electrode active material layer comprises the conductive material, a content (e.g., amount) of the conductive material may be in a range of about 0.01 parts by weight to about 10 parts by weight, about 0.01 parts by weight to about 5 parts by weight, or about 0.1 parts by weight to about 2 parts by weight with respect to the total weight of about 100 parts by weight of the negative electrode active material layer.

The negative electrode current collector may be generally prepared to have a thickness of about 3 µm to about 500 µm. The negative electrode current collector material is not particularly limited as long as the material has high conductivity without causing a chemical change in a corresponding battery. For example, the negative electrode current collector may comprise copper, stainless steel, aluminum, nickel, titanium, carbon subjected to heat treatment, copper or stainless steel which is surface-treated with carbon, nickel, titanium, silver, and/or the like, or an aluminum-cadmium alloy. In some embodiments, similarly to the positive electrode current collector, a fine unevenness may be formed on a surface of the negative electrode current collector to strengthen bonding strength of the negative electrode active material, and the negative electrode current collector may have one or more suitable forms such as a film, a sheet, a foil, a net, a porous body, a foam body, and/or a nonwoven fabric.

Next, a separator to be inserted between the positive electrode and the negative electrode is prepared.

Any separator commonly utilized in a lithium battery may be utilized. A separator having low resistance to the movement of ions in an electrolyte and an excellent or suitable electrolyte impregnation ability may be utilized. For example, the separator may comprise at least one selected from a glass fiber, polyester, Teflon, polyethylene, polypropylene, polytetrafluoroethylene (PTFE), and a combination thereof and may be in the form of a nonwoven fabric or a woven fabric. For example, a windable separator such as polyethylene or polypropylene may be utilized in a lithium ion battery, and a separator having excellent or suitable organic electrolyte impregnating ability may be utilized in a lithium ion polymer battery. For example, the separator may be manufactured according to the following method.

A polymer resin, a filler, and a solvent are mixed to prepare a separator composition. The separator composition may be applied directly on an electrode and dried to form the separator. In some embodiments, the separator composition may be cast on a support, and then a separator film peeled off of the support may be laminated on an electrode to form the separator.

The polymer resin utilized for preparing the separator is not particularly limited, and any material utilized in a binding material of an electrode plate may be utilized. For example, the polymer resin may comprise a vinylidene fluoride/hexafluoropropylene copolymer, PVDF, polyacrylonitrile, polymethyl methacrylate, or a mixture thereof.

Next, the above-described electrolyte is prepared.

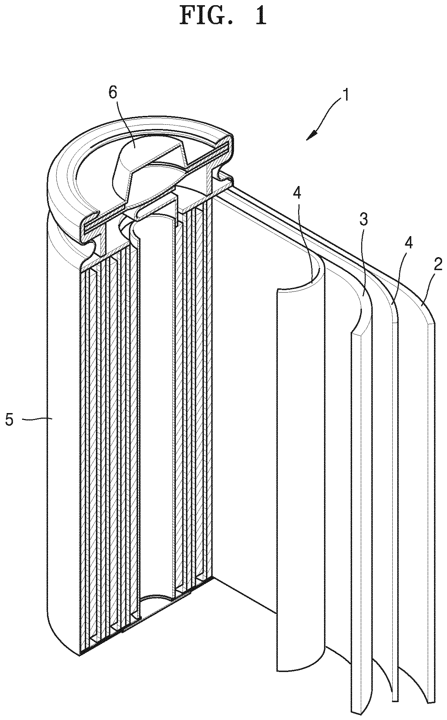

As illustrated in FIG. 1, a lithium battery 1 may comprise a positive electrode 3, a negative electrode 2, and a separator 4. The positive electrode 3, the negative electrode 2, and the separator 4 may be wound or folded and accommodated in a battery case 5. Subsequently, an organic electrolyte may be injected into the battery case 5, and the battery case 5 may be sealed with a cap assembly 6 to complete the lithium secondary battery 1. The battery case 5 may be a cylindrical, prismatic, or thin film type or kind. For example, the lithium battery 1 may be a large-sized thin film-type or kind battery. The lithium battery 1 may be a lithium ion battery.

The separator 4 may be disposed between a positive electrode 3 and a negative electrode 2 to form a battery structure. The battery structure may be stacked in a bi-cell structure and then impregnated in an organic electrolyte, and an obtained result may be accommodated in a pouch and sealed, thereby completing a lithium ion polymer battery.

In some embodiments, a plurality of battery structures may be stacked to form a battery pack, and such a battery pack may be utilized in all devices requiring high capacity and high output power. For example, the battery pack may be utilized in laptop computer(s), smartphone(s), electric vehicle(s), and/or the like.

In a lithium secondary battery according to one embodiment, an increase in direct current internal resistance (DC-IR) may be considerably reduced as compared with a lithium secondary battery adopting general nickel-rich lithium-nickel composite oxide as a positive electrode active material, thereby exhibiting excellent or suitable battery characteristics.

An operating voltage of a lithium secondary battery to which the positive electrode, the negative electrode, and the electrolyte are applied may have, for example, a lower limit of about 2.5 V to about 2.8 V and an upper limit of 4.1 V or more, and may be, for example, in a range of about 4.1 V to about 4.45.

In some embodiments, the lithium secondary battery may be utilized in, for example, a power tool that moves by receiving power from an electric motor, an electric motor vehicle such as an electric vehicle (EV), a hybrid electric vehicle (HEV), or a plug-in hybrid electric vehicle (PHEV), an electric two-wheeled vehicle such as an electric bike (E-bike) or an electric scooter (E-scooter), an electric golf cart, a power storage system, and/or the like, but one or more embodiments are not limited thereto.

As utilized herein, the term "alkyl group" may refer to a branched or unbranched aliphatic hydrocarbon group. In one embodiment, the alkyl group may be unsubstituted or substituted. Examples of the alkyl group may comprise a methyl group, an ethyl group, a propyl group, an isopropyl group, a butyl group, an isobutyl group, a tert-butyl group, a pentyl group, a hexyl group, a cyclopropyl group, a cyclopentyl group, a cyclohexyl group, a cycloheptyl group, and/or the like, but one or more embodiments are not limited thereto. In other embodiments, each of the examples of the alkyl group may be optionally substituted. In other embodiments, the alkyl group may have 1 to 6 carbon atoms. For example, a C1-C6 alkyl group may comprise a methyl group, an ethyl group, a propyl group, an isopropyl group, a butyl group, an isobutyl group, a sec-butyl group, a pentyl group, a 3-pentyl group, a hexyl group, and/or the like, but one or more embodiments are not limited thereto.

At least one hydrogen atom of alkyl may be substituted with a halogen atom, a C1-C20 alkyl group substituted with a halogen atom (for example, CCF₃, CHCF₂, CH₂F, or CCl₃), a C1-C20 alkoxy group, a C2-C20 alkoxyalkyl group, a hydroxyl group, a nitro group, a cyano group, an amino group, an amidino group, hydrazine, hydrazone, a carboxyl group or a salt thereof, a sulfonyl group, a sulfamoyl group, a sulfonic acid or a salt thereof, a phosphoric acid or a salt thereof, a C1-C20 alkyl group, a C2-C20 alkenyl group, a C2-C20 alkynyl group, a C1-C20 heteroalkyl group, a C6-C20 aryl group, a C7-C20 arylalkyl group, a C6-C20 heteroaryl group, a C7-C20 heteroarylalkyl group, a C6-C20 heteroaryloxy group, or a C6-C20 heteroaryloxyalkyl group.

As utilized herein, the term "alkenyl group" may refer to a C2 to C20 hydrocarbon group having at least one carbon-carbon double bond. Examples of the alkenyl group may comprise an ethenyl group, a 1-prophenyl group, a 2-prophenyl group, a 2-methyl-1-prophenyl group, a 1-butenyl group, a 2-butenyl group, a cycloprophenyl group, cyclopentenyl, cyclohexenyl, cycloheptenyl, and/or the like, but one or more embodiments are not limited thereto. In other embodiments, the alkenyl group may be unsubstituted or substituted. In other embodiments, the alkenyl group may have 2 to 40 carbon atoms.

As utilized herein, the term "alkynyl group" may refer to a C2 to C20 hydrocarbon group having at least one carbon-carbon triple bond. Examples of the alkynyl group may comprise an ethynyl group, a 1-propynyl group, a 1-butynyl group, a 2-butynyl group, and/or the like, but one or more embodiments are not limited thereto. In other embodiments, the alkynyl group may be unsubstituted or substituted. In other embodiments, the alkynyl group may have 2 to 40 carbon atoms.

The term "substituted" may refer to a group wherein at least one hydrogen atom is substituted with a halogen atom, a C1-C20 alkyl group substituted with a halogen atom (for example, CCF3, CHCF2, CH2F, or CCl3), a C1-C20 alkoxy group, a C2-C20 alkoxyalkyl group, a hydroxyl group, a nitro group, a cyano group, an amino group, an amidino group, hydrazine, hydrazone, a carboxyl group or a salt thereof, a sulfonyl group, a sulfamoyl group, a sulfonic acid or a salt thereof, a phosphoric acid or a salt thereof, a C1-C20 alkyl group, a C2-C20 alkenyl group, a C2-C20 alkynyl group, a C1-C20 heteroalkyl group, a C6-C20 aryl group, a C7-C20 arylalkyl group, a C6-C20 heteroaryl group, a C7-C20 heteroarylalkyl group, a C6-C20 heteroaryloxy group, or a C6-C20 heteroaryloxyalkyl group.

In the present specification, a substituent is derived from an unsubstituted parent group in which at least one hydrogen atom is substituted with another atom or a functional group. Unless otherwise indicated, if (e.g., when) a functional group is deemed to be "substituted," it is meant that the functional group is substituted with at least one substituent independently selected from a C1-C20 group, a C2-C20 alkenyl group, a C2-C20 alkynyl group, a C1-C20 alkoxy group, a halogen group, a cyano group, a hydroxyl group, and a nitro group. If (e.g., when) a functional group is described as being "optionally substituted," the functional group may be substituted with at least one selected from the above-described substituents.

The term "halogen" may comprise fluorine, bromine, chlorine, iodine, and/or the like.

The term "alkoxy" may refer to "alkyl-O-", and alkyl may be defined above. Examples of an alkoxy group may comprise a methoxy group, an ethoxy group, a 2-propoxy group, a butoxy group, a t-butoxy group, a pentyloxy group, a hexyloxy group, and/or the like. At least one hydrogen atom of the alkoxy may be substituted with the same substituent as the above-described alkyl group.

The term "heteroaryl" may refer to a monocyclic or bicyclic organic group comprising at least one heteroatom selected from N, O, P, and S, wherein the remaining ring atoms are all carbon. A heteroaryl group may comprise, for example, one to five heteroatoms, and in some embodiments, may comprise a five- to ten-membered ring. S or N may be oxidized to have one or more suitable oxidation states.

Examples of the heteroaryl may comprise thienyl, furyl, pyrrolyl, imidazolyl, pyrazolyl, thiazolyl, isothiazolyl, 1,2,3-oxadiazolyl, 1,2,4-oxadiazolyl, 1,2,5-oxadiazolyl, 1,3,4-oxadiazolyl, 1,2,3-thiadiazolyl, 1,2,4-thiadiazolyl, 1,2,5-thiadiazolyl, 1,3,4-thiadiazolyl, isothiazol-3-yl, isothiazol-4-yl, isothiazol-5-yl, oxazol-2-yl, oxazol-4-yl, oxazol-5-yl, isooxazol-3-yl, isooxazol-4-yl, isooxazol-5-yl, 1,2,4-triazol-3-yl, 1,2,4-triazol-5-yl, 1,2,3-triazol-4-yl, 1,2,3-triazol-5-yl, tetrazolyl, pyrid-2-yl, pyrid-3-yl, 2-pyrazin-2-yl, pyrazin-4-yl, pyrazin-5-yl, 2-pyrimidin-2-yl, 4-pyrimidin-2-yl, and/or 5-pyrimidin-2-yl.

The term "heteroaryl" may comprise a case in which a heteroaromatic ring is selectively fused to at least one of an aryl group, a cycloaliphatic group, or a heterocyclic group.

The term "carbon ring" may refer to a saturated or partially unsaturated nonaromatic monocyclic, bicyclic, or tricyclic hydrocarbon group.

Examples of monocyclic hydrocarbon may comprise cyclopentyl, cyclopentenyl, cyclohexyl, cyclohexenyl, and/or the like.

Examples of bicyclic hydrocarbon may comprise bornyl, decahydronaphthyl, bicyclo[2.1.1]hexyl, bicyclo[2.2.1]heptyl, bicyclo[2.2.1]heptenyl, and/or bicyclo[2.2.2]octyl.

Examples of tricyclic hydrocarbon may comprise adamantly and/or the like.

At least one hydrogen atom in the carbon ring may be substituted with a substituent similar to the above-described alkyl group.

Hereinafter, the disclosure will be described in more detail through the following Examples and Comparative Examples. However, the following Examples and Comparative Examples are merely presented to exemplify the disclosure, and the scope of the disclosure is not limited thereto.

### [Examples]

### Preparation Example 1: Synthesis of compound of Formula 4

21.3 g (213 mmol) of 2,2,2-trifluoroethanol was put into a round bottom flask, 100 g of a tetrahydrofuran (THF) solvent was put therein, a temperature was lowered to 0 °C to perform stirring.

21.7 g (213 mmol) of triethylamine was put therein to perform stirring for 30 minutes, and then 15.0 g (71 mmol) of phenylthiophosphonic dichloride was dissolved in 50 g of THF and slowly added dropwise thereto. After the dropwise addition was completed, a temperature was raised to room temperature to then perform stirring for 12 hours.

When such a reaction was completed, a salt was removed through filtration, and after distillation under reduced pressure, column chromatography was performed to prepare a compound of Formula 4.

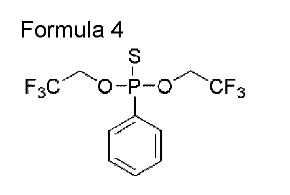

1H NMR (300 MHz, CDCl3): 7.95-7.90 (m, 2H), 7.65-7.60 (m, 1H), 7.55-7.50 (m, 2H), 4.54-4.35 (m, 4H)

### Preparation Example 2: Synthesis of compound of Formula 5

A compound represented by Formula 5 was prepared in substantially the same manner as in Preparation Example 1, except that propargyl alcohol was utilized instead of 2,2,2-trifluoroethanol.

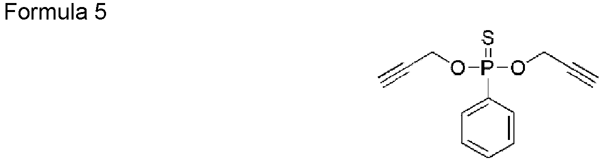

1H NMR (300 MHz, CDCl3): 7.95-7.90 (m, 2H), 7.65-7.60 (m, 1H), 7.55-7.50 (m, 2H), 4.54-4.35 (m, 4H)

### Preparation of electrolyte

### Comparative Example 1

An electrolyte was prepared by adding 1.15 M LiPF₆ to a mixed solvent of EC, EMC, and DMC having a volume ratio of 20:10:70.

### Comparative Example 2

0.1 wt% of a compound represented by Formula 12 as an additive with respect to the total weight of 100 wt% of the electrolyte was added to the electrolyte of Comparative Example 1. The compound of Formula 12 was prepared with reference to Reaction Formula 1 disclosed in the cited literature (J. Org. Chem. 2013, 78, 3561-3569).

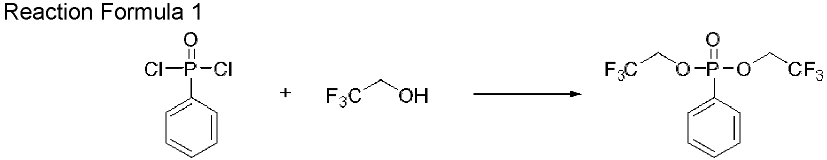

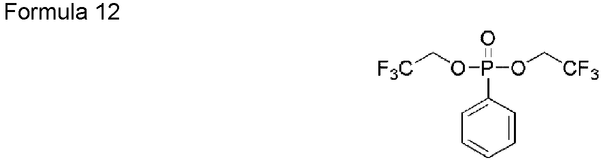

### Comparative Example 3

0.1 wt% of a compound represented by Formula 13 as an additive with respect to the total weight of 100 wt% of the electrolyte was added to the electrolyte of Comparative Example 2. The compound of Formula 13 was synthesized according to a preparation method disclosed in the cited literature (Polymer Degradation and Stability (2021), 193, 109721).

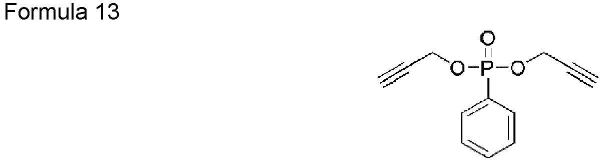

### Example 1

0.1 wt% of the compound of Formula 4 obtained in Preparation Example 1 as an additive with respect to the total weight of 100 wt% of the electrolyte was added to the electrolyte of Comparative Example 1 to prepare an electrolyte.

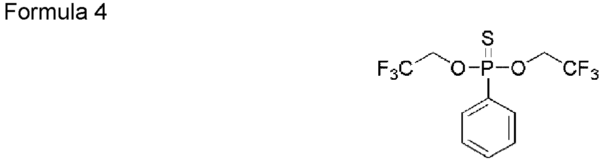

### Examples 2 to 5

Electrolytes were prepared in substantially the same manner as in Example 1, except that a content (e.g., amount) of the compound of Formula 4 was changed to 0.25 wt%, 0.5 wt%, 1 wt%, and 2 wt%, respectively.

### Example 6

An electrolyte was prepared in substantially the same manner as in Example 1, except that the compound of Formula 5 obtained in Preparation Example 2 was utilized as an additive instead of the compound of Formula 4.

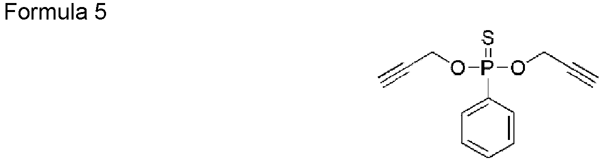

### Examples 7 to 10

Electrolytes were prepared in substantially the same manner as in Example 6, except that a content (e.g., amount) of the compound of Formula 4 was changed into 0.25 wt%, 0.5 wt%, 1 wt%, and 2 wt%, respectively.

### Manufacturing of lithium secondary battery (pouch cell

### Manufacturing Example 1

98 wt% of graphite particles, 1 wt% of CMC, and 1 wt% of an SBR aqueous dispersion binder were mixed, put into distilled water, and then stirred for 60 minutes utilizing a mechanical stirrer to prepare a slurry of a negative active material. The slurry was applied to a thickness of about 60 µm on a copper current collector with a thickness of 10 µm utilizing a doctor blade, dried in a hot air dryer at a temperature of 100 °C for 0.5 hours, dried once more for 4 hours under conditions of vacuum and a temperature of 120 °C, and then roll-pressed to prepare a negative electrode. A mixture density (E/D) of the negative electrode was 1.55 g/cc, and a loading level (UL) thereof was 14.36 mg/cm².

Separately, a positive electrode was prepared according to the following procedure.

94 wt% of LiNi_{0.75}Mn_{0.23}Al_{0.02}O₂, 3.0 wt% of a conductive material (Denka black), and 3.0 wt% of a binder (PVDF) were mixed, put into an N-methyl-2-pyrrolidone solvent, and then stirred for 30 minutes utilizing a mechanical stirrer to prepare a slurry of a positive electrode active material. The slurry was applied to a thickness of about 60 µm on an aluminum current collector with a thickness of 20 µm utilizing a doctor blade, dried in a hot air dryer at a temperature of 100 °C for 0.5 hours, dried once more for 4 hours under conditions of vacuum and a temperature of 120 °C, and then roll-pressed to prepare the positive electrode. A mixture density (E/D) of the positive electrode was 3.15 g/cc, and a loading level (UL) thereof was 27.05 mg/cm².

A lithium secondary battery (pouch cell having about 40 mAh) was manufactured utilizing a polyethylene separator (thickness of 16 µm) as a separator and utilizing the electrolyte of Example 3 as an electrolyte.

### Manufacturing Examples 2 to 10

Lithium secondary batteries (pouch cells) were manufactured in substantially the same manner as in Manufacturing Example 1, except that the electrolytes prepared in Examples 2 to 10 were utilized instead of the electrolyte prepared in Example 1.

### Comparative Manufacturing Examples 1 to 3

Lithium secondary batteries (pouch cells) were manufactured in substantially the same manner as in Manufacturing Example 1, except that the electrolytes prepared in Comparative Examples 1 to 3 were utilized instead of the electrolyte prepared in Example 1.

### Evaluation Example 1: Linear sweep voltammetry (linear test)

94 wt% of LiNi_{0.75}Mn_{0.23}Al_{0.02}O₂, 3.0 wt% of a conductive material (Denka black), and 3.0 wt% of a binder (PVDF) were mixed, put into an N-methyl-2-pyrrolidone solvent, and then stirred for 30 minutes utilizing a mechanical stirrer to prepare a slurry of a positive electrode active material. The slurry was applied to a thickness of about 60 µm on an aluminum current collector with a thickness of 20 µm utilizing a doctor blade, dried in a hot air dryer at a temperature of 100 °C for 0.5 hours, dried once more for 4 hours under conditions of vacuum and at a temperature of 120 °C, and then roll-pressed to prepare a positive electrode. A mixture density (E/D) of the positive electrode was 3.15 g/cc, and a loading level (UL) thereof was 27.05 mg/cm².

A coin-type or kind half secondary cell (CHC) was manufactured utilizing the prepared positive electrode, a lithium metal having a thickness of 0.7 mm, a polyethylene separator (thickness: 16 µm) as a separator, and each of the electrolytes of Example 3, Example 8, and Comparative Example 1 as an electrolyte.

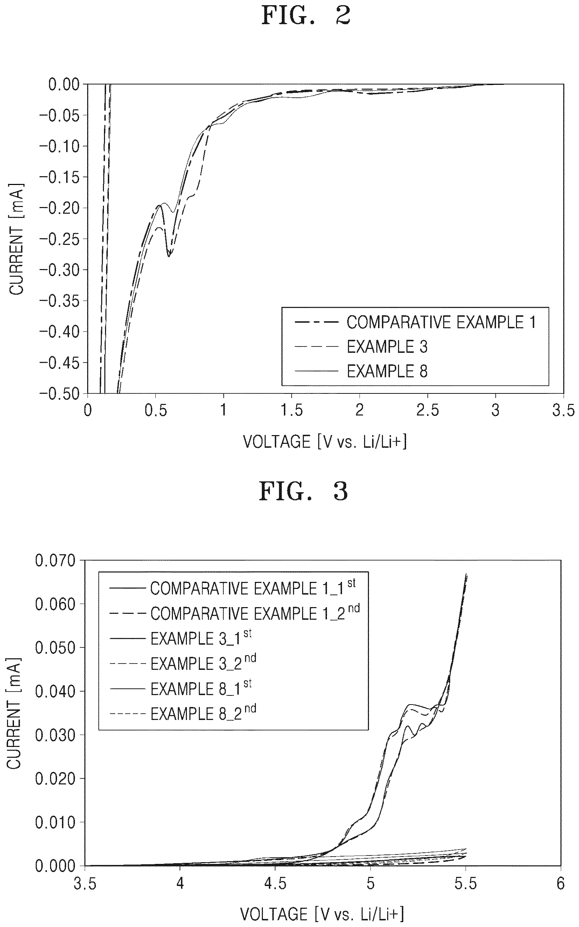

After the CHC was constructed utilizing each of the electrolytes of Example 3, Example 8, and Comparative Example 1, a linear sweep voltammetry test for the CHC was performed to evaluate an oxidation behavior of the electrolyte at a working electrode. Results thereof are shown in FIG. 2.

Under a measurement condition of room temperature, a current was applied at a rate of 1 mV/sec up to an open circuit voltage (OCV) of 6 V (vs. Li/Li⁺) to perform scanning.

Referring to FIG. 2, it was confirmed that the electrolyte of Example 3 and the electrolyte of Example 8 were oxidized near about 3.8 V and near about 4.2 V, respectively. As compared with the electrolyte prepared in Comparative Example 1, it may be confirmed that oxidation may proceed rapidly, and an additive may be decomposed in an overcharge environment (high voltage) to suppress or reduce a voltage rise of a battery and contribute to an improvement in the safety of a cell.

### Evaluation Example 2: Linear sweep voltammetry (linear test)

A three-electrode beaker cell was constructed utilizing each of the electrolytes of Examples 3, Example 8, and Comparative Example 1, and then a linear sweep voltammetry test was performed to evaluate an oxidation behavior of the electrolyte at a working electrode. Results thereof are shown in FIG. 3.

A glassy carbon electrode was utilized as the working electrode, and a lithium metal was utilized as each of a counter electrode and a reference electrode to assemble the three-electrode beaker cell, and the three-electrode beaker cell was left for 1 hour to then perform measurement. Under a measurement condition of room temperature, a current was applied at a rate of 1 mV/sec up to an OCV of 6 V (vs. Li/Li⁺) to perform scanning. In FIG. 3, Comparative Example 1 (1^{st}) and Comparative Example 1 (2^{nd}) corresponded to a case in which measurement was repeated twice utilizing the electrolyte of Comparative Example 1 and Example 3 (1^{st}). Example 3 (2^{nd}) corresponded to a case in which measurement was repeated twice utilizing the electrolyte of Comparative Example 3 and Example 8 (1^{st}). Example 8 (2^{nd}) corresponded to a case in which measurement was repeated twice utilizing the electrolyte of Example 8.

Referring to FIG. 3, it was confirmed that the electrolyte of Example 3 and the electrolyte of Example 8 were oxidized near about 5.2 V and near about 5.4 V, respectively. As compared with the electrolyte prepared in Comparative Example 1, it may be confirmed that oxidation may proceed rapidly, and an additive may be decomposed in an overcharge environment (high voltage) to suppress or reduce a voltage rise of a battery and contribute to an improvement in the safety of a cell.

### Evaluation Example 2: High-temperature (60 °C) capacity retention ratio

The high-temperature lifespan characteristics of the lithium secondary batteries manufactured according to Manufacturing Examples 1 to 10 and Comparative Manufacturing Examples 1 to 3 were evaluated according to the following method.

Each of the lithium secondary batteries was subjected to a formation operation at a temperature of 25 °C, the lithium secondary batteries subjected to the formation operation were charged at a current rate of 1.5 C until a voltage reached 4.2 V (vs. Li), and then, in a constant voltage mode, while 4.2 V was maintained, the charging was cut off at a current rate of 0.05 C. Subsequently, the lithium secondary batteries were discharged at a constant current rate of 1.5 C until the voltage reached 2.5 V (vs. Li) during discharging. Such a charging/discharging cycle was repeated 300 times. The lithium batteries were rested for 10 minutes after every charging/discharging cycle. Some of results thereof are shown in Table 1.

A capacity retention ratio at a 300^{th} cycle is defined by Equation 1. capacity retention ratio (%) = [discharge capacity at 300th cycle/discharge capacity at 1st cycle] × 100

**Table 1**

| TEST No. | Electrolyte additive composition | High-temperature (60 °C) capacity retention ratio (%) |
|---|---|---|
| Manufacturing Example 1 | Formula 4, 0.1 wt% | 97 |
| Manufacturing Example 2 | Formula 4, 0.25 wt% | 98 |
| Manufacturing Example 3 | Formula 4, 0.5 wt% | 97 |
| Manufacturing Example 4 | Formula 4, 1 wt% | 98 |
| Manufacturing Example 5 | Formula 4, 2 wt% | 98.5 |
| Manufacturing Example 6 | Formula 5, 0.1 wt% | 98 |
| Manufacturing Example 7 | Formula 5, 0.25 wt% | 98 |
| Manufacturing Example 8 | Formula 5, 0.5 wt% | 99 |
| Manufacturing Example 9 | Formula 5, 1 wt% | 99 |
| Manufacturing Example 10 | Formula 5, 2 wt% | 97 |
| Comparative Manufacturing Example 1 | X | 94 |
| Comparative Manufacturing Example 2 | Formula 12, 0.1 wt% | 96 |
| Comparative Manufacturing Example 3 | Formula 13, 0.1 wt% | 95 |

As shown in Table 1, it could be seen that the lithium secondary batteries of Manufacturing Examples 1 to 10 utilizing the electrolytes of Examples 1 to 10 had improved lifespan characteristics at a high temperature as compared with Comparative Manufacturing Examples 1 to 3.

While one or more embodiments have been described with reference to the drawings and Examples, the description merely illustrates, and it will be understood by those of ordinary skill in the art that one or more suitable modifications and other equivalent embodiments are possible therefrom. Therefore, the protection scope of the disclosure should be defined by the appended claims and equivalents thereof.

An electrolyte for a lithium secondary battery according to one aspect may form a film on a positive electrode under an overcharge and overvoltage environment to protect the positive electrode and suppress or reduce a voltage rise of a battery, thereby suppressing electrolyte decomposition. Therefore, if (e.g., when) such an electrolyte is adopted, a positive electrode may be protected in an overcharge environment, thereby providing a lithium secondary battery having improved safety and also having improved lifespan characteristics at a high temperature.

The terminology utilized herein is utilized to describe embodiments only, and is not intended to limit the present disclosure. The singular expression comprises the plural expression unless the context clearly dictates otherwise.

As utilized herein, "combination thereof" refers to a mixture, laminate, composite, copolymer, alloy, blend, reaction product, and/or the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout, and duplicative descriptions thereof may not be provided the specification. It will be understood that if (e.g., when) an element such as a layer, film, region, or substrate is referred to as being "on" another element, it can be directly on the other element or intervening element(s) may also be present. In contrast, if (e.g., when) an element is referred to as being "directly on" another element, there are no intervening elements present.

In some embodiments, "layer" herein comprises not only a shape formed on the whole surface when viewed from a plan view, but also a shape formed on a partial surface.

Herein, "or" is not to be construed as an exclusive meaning, for example, "A or B" is construed to comprise A, B, A+B, and/or the like.

As used herein, the term "substantially," "about," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Also, any numerical range recited herein is intended to comprise all sub-ranges of the same numerical precision subsumed within the recited range. For example, a range of "1.0 to 10.0" is intended to comprise all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to comprise all lower numerical limitations subsumed therein and any minimum numerical limitation recited in this specification is intended to comprise all higher numerical limitations subsumed therein. Accordingly, Applicant reserves the right to amend this specification, comprising the claims, to expressly recite any sub-range subsumed within the ranges expressly recited herein.

As used herein, the terms "use," "using," and "used" may be considered synonymous with the terms "utilize," "utilizing," and "utilized," respectively.

The use of "may" when describing embodiments of the present disclosure refers to "one or more embodiments of the present disclosure."

As used herein, the singular forms "a", "an" and "the" are intended to comprise the plural forms as well, unless the context clearly indicates otherwise.

In the present disclosure, if (e.g., when) particles are spherical, "size" or "particle diameter" indicates a particle diameter or an average particle diameter, and if (e.g., when) the particles are non-spherical, the "size" or "particle diameter" indicates a major axis length or an average major axis length. That is, if (e.g., when) particles are spherical, "particle diameter" indicates a particle diameter, and when the particles are non-spherical, the "particle diameter" indicates a major axis length. The size or diameter of the particles may be measured utilizing a scanning electron microscope or a particle size analyzer. As the particle size analyzer, for example, HORIBA, LA-950 laser particle size analyzer, may be utilized. When the size of the particles is measured utilizing a particle size analyzer, the average particle diameter (or size) is referred to as D50. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.

As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

The vehicle, a battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the disclosure as defined by the following claims and equivalents thereof.

## Claims

1. An electrolyte for a lithium secondary battery, the electrolyte comprising:
a lithium salt;
an organic solvent; and
an additive represented by Formula 1: 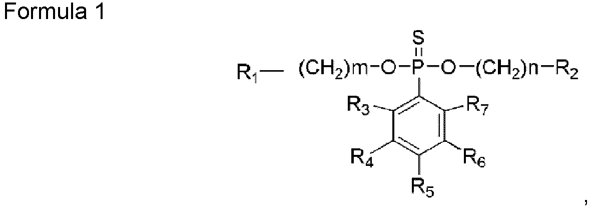 wherein, in Formula 1, m and n are each independently an integer of 1 to 4,
R₁ and R₂ are each independently a substituted or unsubstituted C1-C20 alkyl group, a fluorinated C1-C20 alkyl group, a substituted or unsubstituted C2-C20 alkenyl group, a substituted or unsubstituted C3-C20 alkynyl group, a substituted or unsubstituted C6-C50 aryl group, or a substituted or unsubstituted C6-C50 heteroaryl group, and
R₃ to R₇ are each independently hydrogen, a C1-C5 alkyl group, a C2-C10 alkenyl group, a C3-C10 alkynyl group, a C3-C20 cycloalkyl group, a C6-C50 aryl group, a C7-C50 alkylaryl group, or a C6-C50 heteroaryl group.

2. The electrolyte of claim 1, wherein the additive represented by Formula 1 is an additive represented by Formula 1-1: 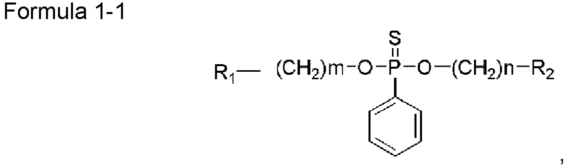 and wherein, in Formula 1-1, m and n are each independently an integer of 1 to 4, and
R₁ and R₂ are each independently a substituted or unsubstituted C1-C20 alkyl group, a fluorinated C1-C20 alkyl group, a substituted or unsubstituted C2-C20 alkenyl group, a substituted or unsubstituted C3-C20 alkynyl group, a substituted or unsubstituted C6-C50 aryl group, or a substituted or unsubstituted C6-C50 heteroaryl group.

3. The electrolyte of claim 1 or claim 2, wherein one or both of R₁ and R₂ in Formula 1 are each a fluorinated C1-C20 alkyl group or a substituted or unsubstituted C3-C20 alkynyl group.

4. The electrolyte of claim 3, wherein the fluorinated C1-C20 alkyl group is a perfluorinated C1-C20 alkyl group.

5. The electrolyte of any one of the preceding claims, wherein the additive represented by Formula 1 is an additive represented by Formula 2 or Formula 3: 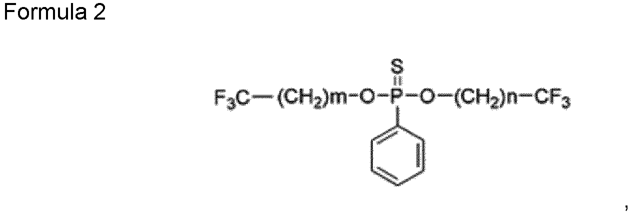 wherein, in Formula 2, m and n are identical to each other and are each an integer of 1 to 4, and 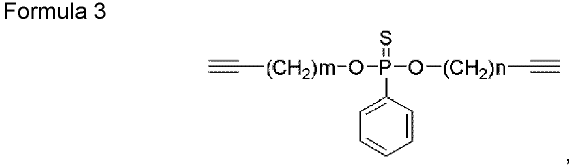 and wherein, in Formula 3, m and n are identical to each other and are each an integer of 1 to 4.

6. The electrolyte of any one of the preceding claims, wherein the additive represented by Formula 1 is at least one selected from additives represented by Formulas 4 to 7:

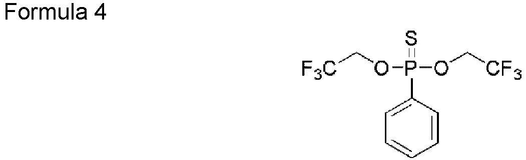

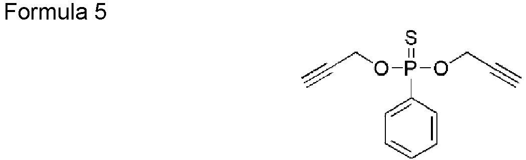

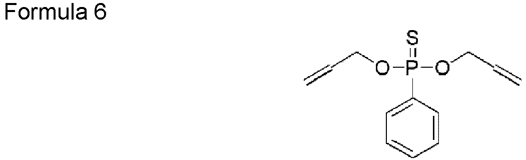

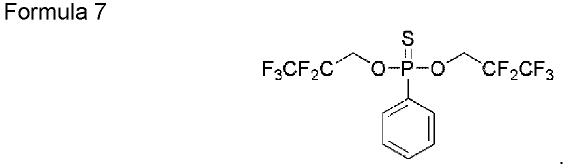

7. The electrolyte of any one of the preceding claims, wherein a content of the additive is in a range of about 0.1 wt% to about 10 wt% with respect to a total weight of the electrolyte.

8. The electrolyte of any one of the preceding claims, wherein a content of the additive is in a range of about 0.1 wt% to about 5 wt% with respect to a total weight of the electrolyte.

9. The electrolyte of any one of the preceding claims, wherein a concentration of the lithium salt in the electrolyte is in a range of about 0.01 M to about 5.0 M.

10. The electrolyte of any one of the preceding claims, wherein the lithium salt comprises at least one selected from LiPF₆, LiBF₄, LiSbF₆, LiAsF₆, LiClO₄, LiCF₃SO₃, Li(CF₃SO₂)₂N, Li(FSO₂)₂N, LiC₄F₉SO₃, LiAlO₂, LiAlCl₄, LiN(CₓF₂ₓ₊₁SO₂)(C_{y}F_{2y+1}SO₂) (wherein 2≤x≤20 and 2≤y≤20), LiCl, Lil, lithium bis(oxalato)borate (LiBOB), LiPO₂F₂, and compounds represented by Formulas 8 to 11:

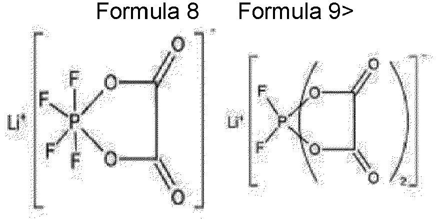

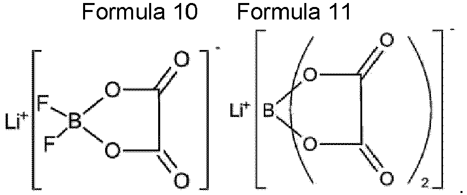

11. The electrolyte of any one of the preceding claims, wherein the organic solvent comprises at least one selected from ethyl methyl carbonate (EMC), methyl propyl carbonate, ethyl propyl carbonate, dimethyl carbonate (DMC), diethyl carbonate (DEC), dipropyl carbonate, propylene carbonate (PC), ethylene carbonate (EC), fluoroethylene carbonate (FEC), vinylene carbonate (VC), vinylethylene carbonate (VEC), butylene carbonate, ethyl propionate, ethyl butyrate, dimethyl sulfoxide, dimethylformamide, dimethylacetamide, gamma-valerolactone, gamma-butyrolactone, and tetrahydrofuran.

12. A lithium secondary battery comprising:
a positive electrode comprising a positive electrode active material;
a negative electrode comprising a negative electrode active material; and
the electrolyte of any one of the preceding claims between the positive electrode and the negative electrode.
